# EUROPÄISCHE PATENTANMELDUNG

(11) **EP 4 571 494 A1**
(43) Veröffentlichungstag der Anmeldung: **18.06.2025**
(21) Anmeldenummer: 23217384.9
(22) Anmeldetag: 16.12.2023
(51) Int. Cl.: G06F 8/61

(54) **SYSTEM UND VERFAHREN ZUR BEREITSTELLUNG EINER SOFTWARE ZUR MOTORSTEUERUNG FÜR EINEN ELEKTROMOTOR**

(71) Anmelder: Elmos Semiconductor SE, 44227 Dortmund (DE)
(72) Erfinder: STEPHAN, Waldemar, 44319 Dortmund (DE); MARKMANN, Matthias, 44309 Dortmund (DE)
(74) Vertreter: Tautz & Schuhmacher

(57) **Zusammenfassung**

Bereitgestellt wird ein System (10) zur Bereitstellung einer Software zur Motorsteuerung für einen Elektromotor (12). Das System (10) umfasst ein Betriebssystem (14), welches dazu ausgelegt ist, eine Basisfunktionalität für die Motorsteuerung des Elektromotors (12) bereitzustellen. Zudem umfasst das System (10) eine softwarebasierte Steuergerätschnittstelle (16), welche dazu ausgelegt ist, das Betriebssystem (14) auf einem vorbestimmten Steuergerät (18) auszuführen und das vorbestimmte Steuergerät (18) dazu zu veranlassen, anhand vom Betriebssystem (14) vorgegebener Steuerbefehle Steuersignale für den Elektromotor (12) auszugeben. Ferner umfasst das System (10) eine softwarebasierte Simulationsschnittstelle (20), welche dazu ausgelegt ist, das Betriebssystem (14) in einer softwarebasierten Simulationsumgebung (22) auszuführen und vom Betriebssystem (14) vorgegebene Steuerbefehle der Simulationsumgebung (22) bereitzustellen.

## Beschreibung

Bereitgestellt werden Systeme zur Bereitstellung einer Software zur Motorsteuerung für einen Elektromotor, ein Verfahren zur Bereitstellung einer Software zur Motorsteuerung für einen Elektromotor, ein Verfahren zur Konfiguration eines Steuergeräts zur Motorsteuerung eines Elektromotors, und ein Verfahren zur Herstellung eines Steuergeräts. Die Offenbarung liegt somit insbesondere auf dem Gebiet der Steuergeräte für Elektromotoren.

Herkömmlicherweise werden für die Entwicklung einer Software zur Motorsteuerung eines Elektromotors eine Vielzahl von verschiedenen Softwareprogrammen, von Entwicklungsplatinen und von Mikrokontrollern benötigt. Dabei müssen herkömmlicherweise die Softwareprogramme für den Betrieb auf verschiedenen Mikrocontrollern und in verschiedenen Softwareumgebungen oftmals spezifisch angepasst werden. Dies bedingt einen erheblichen Aufwand zur Bereitstellung, Entwicklung und Anpassung von Software zur Motorsteuerung. Außerdem können durch die erforderlichen Anpassungen unerwünschte Abweichungen in der Funktionalität der Software zur Motorsteuerung in Abhängigkeit von der Umgebung, in welcher die Software betrieben wird, auftreten.

Vor dem Hintergrund dieses Standes der Technik besteht die Aufgabe der vorliegenden Offenbarung darin, ein System und/oder ein Verfahren anzugeben, welche jeweils geeignet sind, den Stand der Technik zu bereichern. Die Aufgabe kann optional darin bestehen, ein System und/oder ein Verfahren bereitzustellen, welches den Aufwand bei der Bereitstellung, Entwicklung, Anpassung und beim Testen einer Software zur Motorsteuerung eines Elektromotors reduziert.

Gelöst wird die Aufgabe durch die Merkmale der unabhängigen Ansprüche. Die nebengeordneten Ansprüche und die Unteransprüche haben jeweils optionale Weiterbildungen der Offenbarung zum Inhalt.

In einem ersten Aspekt wird die Aufgabe durch ein System zur Bereitstellung einer Software zur Motorsteuerung für einen Elektromotor gelöst. Das System umfasst ein Betriebssystem, welches dazu ausgelegt ist, eine Basisfunktionalität für die Motorsteuerung des Elektromotors bereitzustellen. Zudem umfasst das System eine softwarebasierte Steuergerätschnittstelle, welche dazu ausgelegt ist, das Betriebssystem auf einem vorbestimmten Steuergerät auszuführen und das vorbestimmte Steuergerät dazu zu veranlassen, anhand vom Betriebssystem vorgegebener Steuerbefehle Steuersignale für den Elektromotor auszugeben. Außerdem umfasst das System eine softwarebasierte Simulationsschnittstelle, welche dazu ausgelegt ist, das Betriebssystem in einer softwarebasierten Simulationsumgebung auszuführen und vom Betriebssystem vorgegebene Steuerbefehle der Simulationsumgebung bereitzustellen.

In einem weiteren Aspekt wird ein System zur Bereitstellung einer Software zur Motorsteuerung für einen Elektromotor bereitgestellt. Das System umfasst ein Betriebssystem, welches dazu ausgelegt ist, eine Basisfunktionalität für die Motorsteuerung des Elektromotors bereitzustellen. Zudem umfasst das System eine softwarebasierte Simulationsumgebung, welche auf einem Computer ausführbar ist, sowie eine softwarebasierte Steuergerätschnittstelle, welche dazu ausgelegt ist, das Betriebssystem auf einem vorbestimmten Steuergerät auszuführen und das vorbestimmte Steuergerät dazu zu veranlassen, anhand vom Betriebssystem vorgegebener Steuerbefehle Steuersignale für den Elektromotor auszugeben. Außerdem umfasst das System eine softwarebasierte Simulationsschnittstelle, welche dazu ausgelegt ist, das Betriebssystem in der softwarebasierten Simulationsumgebung auszuführen und vom Betriebssystem vorgegebene Steuerbefehle der Simulationsumgebung bereitzustellen.

In einem weiteren Aspekt wird ein Verfahren zur Bereitstellung einer Software zur Motorsteuerung für einen Elektromotor bereitgestellt. Das Verfahren umfasst ein Bereitstellen eines Betriebssystems, welches dazu ausgelegt ist, eine Basisfunktionalität für die Motorsteuerung des Elektromotors bereitzustellen, sowie ein Ausführen des Betriebssystems in Kombination mit einer softwarebasierten Simulationsschnittstelle in einer softwarebasierten Simulationsumgebung, wobei die softwarebasierte Simulationsschnittstelle dazu ausgelegt ist, vom Betriebssystem vorgegebene Steuerbefehle der Simulationsumgebung bereitzustellen. Zudem umfasst das Verfahren ein Anpassen zumindest eines Betriebsparameters für die Motorsteuerung für den Elektromotor unter Verwendung der softwarebasierten Simulationsumgebung, sowie ein Ausführen des Betriebssystems auf einem vorbestimmten Steuergerät zur Steuerung des Elektromotors unter Verwendung des Betriebssystems, des zumindest einen angepassten Betriebsparameters und einer softwarebasierten Steuergerätschnittstelle, wobei die softwarebasierte Steuergerätschnittstelle dazu ausgelegt ist, das vorbestimmte Steuergerät dazu zu veranlassen, anhand vom Betriebssystem vorgegebener Steuerbefehle Steuersignale an den Elektromotor auszugeben.

In einem weiteren Aspekt wird ein Verfahren zur Konfiguration eines Steuergeräts zur Motorsteuerung eines Elektromotors bereitgestellt. Das Verfahren umfasst ein Bereitstellen eines Betriebssystems, welches dazu ausgelegt ist, eine Basisfunktionalität für die Motorsteuerung des Elektromotors bereitzustellen. Außerdem umfasst das Verfahren ein Ausführen des Betriebssystems in Kombination mit einer softwarebasierten Simulationsschnittstelle in einer softwarebasierten Simulationsumgebung, wobei die softwarebasierte Simulationsschnittstelle dazu ausgelegt ist, vom Betriebssystem vorgegebene Steuerbefehle der Simulationsumgebung bereitzustellen. Darüber hinaus umfasst das Verfahren ein Anpassen zumindest eines Betriebsparameters für die Motorsteuerung für den Elektromotor unter Verwendung der softwarebasierten Simulationsumgebung, sowie ein Applizieren des Betriebssystems und des zumindest einen angepassten Betriebsparameters auf das Steuergerät mittels einer auf das Steuergerät angepassten softwarebasierten Steuergerätschnittstelle.

In einem weiteren Aspekt wird ein Verfahren zur Herstellung eines Steuergeräts zur Motorsteuerung eines Elektromotors bereitgestellt. Das Verfahren umfasst ein Bereitstellen eines Steuergeräts und ein Konfigurieren des Steuergeräts anhand eines offenbarungsgemäßen Verfahrens zur Konfiguration eines Steuergeräts zur Motorsteuerung eines Elektromotors.

Eine Software zur Motorsteuerung für einen Elektromotor ist dabei eine Software, welche dazu ausgelegt ist, auf einem Steuergerät betrieben zu werden und das Steuergerät dazu zu veranlassen, Steuerbefehle zur Steuerung und/oder Regelung des Motors auszugeben. Das "Bereitstellen" der Software zur Motorsteuerung bedeutet dabei, dass eine für ein vorbestimmtes Steuergerät angepasste Software generiert wird, sodass mittels dieser Software das vorbestimmte Steuergerät zur Motorsteuerung eines Elektromotors geeignet und optional optimiert ist.

Das Betriebssystem bildet dabei eine Softwarekomponente der Software zur Motorsteuerung für einen Elektromotor. Das Betriebssystem kann dabei dazu eingerichtet sein, eine grundlegende Funktionalität des vorbestimmten Steuergeräts bereitzustellen, und das Ausführen eines oder mehrerer Software Applikationen einer Applikationssammlung durch das vorbestimmte Steuergerät zu ermöglichen. Das Betriebssystem kann eine vorgegebene Software Umgebung in Form einer Run-Time-Environment aufweisen oder als solche ausgebildet sein, und optional alle für den Betrieb des vorbestimmten Steuergeräts erforderlichen Basisfunktionen, wie etwa für die grundlegende Motorsteuerung, Kommunikationsfunktionen und/oder Systemfunktionen aufweisen. Optional kann die Basisfunktionalität für die Motorsteuerung des Elektromotors eine oder mehrere der folgenden Funktionen bereitstellen: einen für das vorbestimmte Steuergerät optimierten Motorsteuerungsalgorithmus, wie etwa einen Algorithmus für feldorientierte Steuerung für einen dreiphasigen BLDC Motor, Funktionen zum Start und zur Initialisierung des Steuergeräts, Funktionen zum Start des Elektromotors, Funktionen zur Steuerung der Geschwindigkeit und/oder des Drehmoments des Elektromotors, Funktionen zum Anhalten des Motors; Funktionen zur Diagnose und/oder Behebung von Störungen, Funktionen zur Erkennung einer Überlastung des Elektromotors, Funktionen zum Abschalten des Elektromotors, Funktionen zur Ermittlung einer Temperatur, eines Stromflusses und/oder einer Spannung im Elektromotor, grundlegende Kommunikationsfunktionen, eine Schnittstelle für Applikationen, und Funktionen zur Verwaltung und Abarbeitung von Aufgaben.

Eine softwarebasierte Steuergerätschnittstelle ist dabei eine Schnittstelle, welche eine Interaktion des Betriebssystems mit dem vorbestimmten Steuergerät ermöglicht. Die softwarebasierte Steuergerätschnittstelle kann dabei die Funktionalität eines Hardware Abstraction Layers aufweisen. Die softwarebasierte Steuergerätschnittstelle kann dabei dazu eingerichtet sein, ein Ausführen des Betriebssystems auf dem vorbestimmten Steuergerät zur ermöglichen und die Steuerbefehle, welche das aus dem Steuergerät ausgeführte Betriebssystem generiert, in Steuersignale zu überführen, welche das Steuergerät zur Steuerung des Motors ausgibt. Die softwarebasierte Steuergerätschnittstelle kann somit zusammen mit dem Betriebssystem auf dem Steuergerät ausführbar sein. Die softwarebasierte Steuergerätschnittstelle kann optional individuell an das vorbestimmte Steuergerät und optional an den vorgesehenen Elektromotor angepasst sein. Optional können verschiedene softwarebasierte Steuergerätschnittstellen bereitgestellt werden, um das Betriebssystem auf unterschiedlichen vorbestimmten Steuergeräten auszuführen. Dass die Steuergerätschnittstelle softwarebasiert ist, bedeutet dabei, dass die Steuergerätschnittstelle durch einen Programmcode bereitgestellt werden kann und optional keine separaten Hardwarekomponenten benötigt. So kann optional die Steuergerätschnittstelle als Programmcode auf demselben Steuergerät ausgeführt werden, wie das Betriebssystem selbst. Optional kann die Steuergerätschnittstelle als Teil eines Quellcodes des Betriebssystems bereitgestellt werden. Dabei kann der Quellcode des Betriebssystems derart ausgestaltet sein, dass ein Ersetzen und/oder Anpassen des Teils des Quellcodes, welcher der Steuergerätschnittstelle entspricht, ohne signifikante Änderungen der anderen Teile des Quellcodes des Betriebssystems vorgenommen werden kann.

Eine softwarebasierte Simulationsschnittstelle ist dabei eine Schnittstelle, welche eine Interaktion des Betriebssystems mit einer softwarebasierten Simulationsumgebung ermöglicht. Das Betriebssystem, die softwarebasierte Simulationsschnittstelle, und die softwarebasierte Simulationsumgebung können dabei optional auf einer Recheneinheit ausgeführt werden, wie etwa auf einem Personal Computer. Die softwarebasierte Simulationsschnittstelle kann dabei die Funktionalität eines Software Abstraction Layers aufweisen. Mit anderen Worten, die softwarebasierte Simulationsschnittstelle kann optional nach Art eines Emulators ein Ausführen des Betriebssystems auf einer andersartigen Recheneinheit als das vorbestimmte Steuergerät ermöglichen. Die softwarebasierte Simulationsschnittstelle kann dabei an die Recheneinheit, auf welcher die softwarebasierten Simulationsumgebung ausgeführt wird, und auf die softwarebasierten Simulationsumgebung an sich angepasst sein. Dabei kann die softwarebasierte Simulationsschnittstelle dazu ausgelegt sein, die vom Betriebssystem vorgegebenen bzw. ausgegebenen Steuerbefehle in eine für die softwarebasierte Simulationsumgebung geeignete Form zu konvertieren, sodass die Steuerbefehle von der softwarebasierte Simulationsumgebung weiterverarbeitet werden können. Die softwarebasierte Simulationsumgebung kann dabei eine Benutzeroberfläche und insbesondere, eine grafische Benutzeroberfläche aufweisen, welche einem Benutzer des Systems eine Bedienung der Simulationsumgebung zur Anpassung und/oder Konfiguration von Parametern ermöglichen kann. Die Simulationsumgebung kann optional einem Benutzer ermöglichen, Software Applikationen zu erstellen und/oder zu konfigurieren, welche sodann in dem Betriebssystem ausgeführt werden können. Der Benutzer kann etwa in der Simulationsumgebung Parameter und/oder andere Vorgaben eingeben, etwa in Form von gewünschten Einstellungen, spezifischen Daten betreffend den zu steuernden Elektromotor, Steuerparameter, Einstellpunkte und Sollwerte etc. Die Eingaben können dabei das Betriebssystem und/oder mögliche Software Applikationen betreffen. Die Simulationsumgebung kann dabei dazu ausgelegt sein, ein Verhalten des vorbestimmten Steuergeräts in Abhängigkeit von den gewählten Parametern und Eingaben zu simulieren und dem Benutzer eine technisch sinnvolle Wahl der Parameter und Eingaben bzw.

Einstellungen zu ermöglichen, die sodann mit dem Betriebssystem und/oder den Software Applikationen auf das Steuergerät appliziert werden sollen. Optional kann die Simulationsschnittstelle als Teil eines Quellcodes des Betriebssystems bereitgestellt werden. Dabei kann der Quellcode des Betriebssystems derart ausgestaltet sein, dass ein Ersetzen und/oder Anpassen des Teils des Quellcodes, welcher der Simulationsschnittstelle entspricht, ohne signifikante Änderungen der anderen Teile des Quellcodes des Betriebssystems vorgenommen werden kann.

Eine softwarebasierte Steuergerätschnittstelle kann entsprechend eine von einem Benutzer bedienbare Softwareumgebung darstellen, anhand welcher sich unter Verwendung des Betriebssytems die Motorsteuerung eines Elektromotors mittels des Betriebssystems simulieren lässt. Dabei kann die softwarebasierte Steuergerätschnittstelle dazu augestaltet sein, dem Benutzer ein Vorgeben und/oder Abändern von Parametern in Software Applikationen, welche in dem Betriebssytem ausgeführt werden, zu ermöglichen und auf diese Weise Software Applikationen zu generieren, anzupassen und/oder zu testen. Die softwarebasierte Simulationsschnittstelle und die softwarebasierte Simulationsumgebung können somit auf einem Computer ausführbar sein. Das Betriebssystem kann mittels der softwarebasierten Simulationsschnittstelle auf dem Computer und optional in der softwarebasierten Simulationsumgebung ausführbar sein.

Im Allgemeinen bedeutet im Rahmen der Offenbarung der Terminus "softwarebasiert", dass die jeweilige softwarebasierte Komponente in Form eines Programmcodes bereitgestellt werden kann, ohne zwingend speziell dafür ausgelegte Hardwarekomponenten aufweisen zu müssen.

Bei einem Steuergerät kann es sich um einen integrierten Schaltkreis handeln. Das Steuergerät kann einen Mikrocontroller aufweisen oder als solcher ausgebildet sein. Das Steuergerät kann optional zumindest eine der folgenden Komponenten aufweisen: einen Prozessor, einen ROM Speicher, und einen RAM Speicher.

Ein Computer gemäß der vorliegenden Offenbarung kann ein handelsüblicher Personal Computer sein. Alternativ kann der Computer als ein Tablet Computer, ein Notebook, ein Smartphone, ein Server, oder in Form einer Cloud als eine über ein Computernetzwerk erreichbare Recheneinheit ausgebildet sein. Insbesondere kann der Computer zumindest eine der folgenden Komponenten aufweisen: einen Prozessor, einen ROM Speicher, und einen RAM Speicher. Der Computer kann ferner Mittel zur Eingabe und Ausgabe von Informationen an einen Benutzer aufweisen, wie etwa eine Anzeigevorrichtung, wie etwa ein Display, einen Lautsprecher zur Ausgabe von Audiosignalen, und/oder eine Tastatur, eine Maus und/oder Mittel zur Spracheingabe.

Die Offenbarung bietet den Vorteil, dass eine Software zur Motorsteuerung für einen Elektromotor sowohl in einer softwarebasierten Simulationsumgebung als auch auf einem vorbestimmten Steuergerät ausgeführt werden kann, ohne dass dafür Anpassungen der Software zur Motorsteuerung erforderlich sind. Dies bietet somit den Vorteil, dass etwaige Abweichungen in der Software zur Motorsteuerung, welche bei der Vornahme von herkömmlicherweise erforderlichen Anpassungen zur Adaption an das Steuergerät bzw. an die Simulationsumgebung auftreten können, entfallen, und entsprechend die Simulation der Motorsteuerung in der softwarebasierten Simulationsumgebung eine hohes Maß an Genauigkeit und Verlässlichkeit aufweisen kann.

Ferner bietet die Offenbarung den Vorteil, dass die Vornahme von Änderungen am Betriebssystem selbst zur etwaigen Anpassung an eine Simulationsumgebung nicht erforderlich ist. Folglich bietet dies den Vorteil, dass das Betriebssystem als abgeschlossenes und für den Benutzer unveränderliches Softwareprodukt bereitgestellt werden kann. Das Herstellen der Kompatibilität mit einem vorbestimmten Steuergerät oder mit einer vorbestimmten Simulationsumgebung kann vielmehr offenbarungsgemäß durch das Bereitstellen eines Systems mit einer geeigneten Steuergerätschnittstelle und einer geeigneten Simulationsschnittstelle erfolgen. Dadurch kann erreicht werden, dass sich ein Benutzer optional zur Individualisierung einer Software zur Motorsteuerung auf eine Anpassung von Software Applikationen, welche in dem Betriebssystem ausgeführt werden, beschränken kann, ohne jedoch Änderungen am Betriebssystem selbst vornehmen zu können und zu müssen. Dies bietet ferner den Vorteil, dass optional eine Verifikation der durch das Betriebssystem bereitgestellten Basisfunktionalität eingeschränkt werden kann oder gar ganz entfallen kann, wodurch ein Testaufwand für die Software zur Motorsteuerung reduziert werden kann.

Außerdem bietet die Offenbarung den Vorteil, dass die Entwicklung und Verifikation der Software zur Motorsteuerung hinsichtlich der funktionalen Sicherheit beschleunigt werden können, da das Betriebssystem als abgeschlossenes und nicht-veränderbares Softwaremodul bereitgestellt werden kann, und Änderungen und Verifikationen sich etwa auf Software Applikationen beschränken können. Außerdem muss keine Anpassung des Betriebssystems und/oder von Software-Applikationen von der Simulationsumgebung auf das Steuergerät und umgekehrt erfolgen.

Zudem bietet die Offenbarung den Vorteil, dass durch eine Anpassung der softwarebasierten Steuergerätschnittstelle ein Aufwand für eine Migration der Software zur Motorsteuerung auf ein anderes Steuergerät gering gehalten werden kann, da insbesondere eine Änderung des Betriebssystems nicht zwingend erforderlich ist.

Ferner bietet die Offenbarung den Vorteil, dass durch die Bereitstellung der softwarebasierten Steuergerätschnittstelle das Betriebssystem und etwaige Software Applikationen hardwareunabhängig, d. h. nicht spezifisch für nur eine Art von Steuergeräten, bereitgestellt werden können und entsprechend Entwicklungsarbeiten für eine Anpassung des Betriebssystems und/oder von Software Applikationen reduziert werden können oder ganz entfallen können. Dadurch kann ferner eine Wiederverwendbarkeit des Betriebssystems und/oder von Software Applikationen für andere Arten von Steuergeräten und/oder für zukünftige Generationen von Steuergeräten ermöglicht werden.

Zudem bietet die Offenbarung den Vorteil, dass die Software zur Motorsteuerung eines Elektromotors modular bereitgestellt werden kann. Dies kann ermöglichen, dass bei etwaigen Änderungen und/oder Anpassungen primär nur solche Module der Software getestet werden müssen, welche geändert bzw. angepasst wurden, während andere Module, die nicht geändert und/oder angepasst wurden, nicht getestet werden müssen. So kann insbesondere ein Erfordernis zum Testen des Betriebssystems entfallen, wenn lediglich Änderungen an der softwarebasierten Steuergerätschnittstelle vorgenommen wurden, etwa um die Software an die Verwendung mit einem anderen vorbestimmten Steuergerät anzupassen.

Die softwarebasierte Simulationsumgebung kann optional eine MATLAB Simulationsumgebung aufweisen oder als solche ausgebildet sein. Eine MATLAB Simulationsumgebung ist dabei eine auf der kommerziellen Simulationssoftware MATLAB und optional SIMULINK basierende Simulationsumgebung. Dies bietet den Vorteil, dass die Simulationsumgebung mit kommerziell erhältlichen Softwarelösungen erstellt werden kann, wobei der Benutzer optional auf eine Vielzahl von bereitgestellten Anwendungen und Funktionen zurückgreifen kann. Dies kann die Bereitstellung und Handhabung der softwarebasierten Simulationsumgebung vereinfachen.

Die softwarebasierte Simulationsumgebung kann optional als eigenständiges Softwareprogramm auf dem Computer ausführbar sein. Optional kann die softwarebasierte Simulationsumgebung als eigenständige WINDOWS Applikation ausgestaltet sein. Dies kann die Bereitstellung und Benutzung der Simulationsumgebung vereinfachen. Insbesondere kann dies den Vorteil bieten, dass die Simulationsumgebung auf einem handelsüblichen Personal Computer mit WINDOWS Betriebssystem bereitgestellt werden kann und entsprechend die Bereitstellung von spezieller Hardware nicht zwingend erforderlich ist.

Das System kann ferner eine softwarebasierte Applikationssammlung mit zumindest einer in dem Betriebssystem ausführbaren Software Applikation umfassen. Dabei kann das System derart ausgelegt sein, dass die zumindest eine Software Applikation durch einen Benutzer des Systems anpassbar ist. Dies kann dem Benutzer eine Anpassung und Individualisierung der Motorsteuerung an den vorgesehenen Einsatzzweck ermöglichen. Insbesondere kann dies eine Anpassung der Motorsteuerung ermöglichen, ohne dass dazu eine Änderung am Betriebssystem selbst vorgenommen werden muss. Optional können Software Applikationen durch den Benutzer des Systems zur softwarebasierten Applikationssammlung hinzufügbar sein.

Optional kann die Software derart ausgestaltet sein, dass alle sicherheitsrelevanten Funktionen und/oder alle Funktionen, die schnelle Prozesse beinhalten, dem Betriebssystem zugeordnet sind und optional ausschließlich vom Betriebssystem ausführbar sind. Dabei kann die Software derart eingerichtet sein, dass ein Benutzer keinen Zugriff auf das Betriebssystem hat und demnach keine Änderungen an sicherheitsrelevanten Funktionen vornehmen kann. Entsprechend können optional die Software Applikationen in der Applikationssammlung primär oder ausschließlich solche Funktionen beinhalten, welche nicht sicherheitsrelevant sind und keine schnellen Prozesse beinhalten. Dies kann ermöglichen, dass Benutzer Änderungen an den Software Applikationen vornehmen können, ohne das Betriebssystem an sich zu beeinträchtigen bzw. zu ändern.

Optional kann das Betriebssystem derart bereitgestellt werden, dass dieses keine hardware-spezifischen Einstellungen aufweist. Dies kann den Vorteil bieten, dass für die Anpassung der Software an ein anderes vorbestimmtes Steuergerät keine Änderung des Betriebssystems an sich erforderlich ist. Optional können die hardware-spezifischen Einstellungen teilweise oder ausschließlich in der softwarebasierten Steuergerätschnittstelle hinterlegt sein.

Das Betriebssystem kann in unveränderter Form sowohl mit der softwarebasierten Steuergerätschnittstelle als auch mit der softwarebasierten Simulationsschnittstelle verwendbar sein. Dies bietet den Vorteil, dass das identische Betriebssystem im Rahmen der Simulation verwendet werden kann, welches auch auf dem vorbestimmten Steuergerät betrieben werden kann. Dadurch können etwaige Ungenauigkeiten und/oder Abweichungen zwischen der Funktionalität des Betriebssystems im realen Betrieb auf dem vorbestimmten Steuergerät einerseits und der Funktionalität des Betriebssystems in der Simulation andererseits reduziert oder gar ganz vermieden werden. Dies bietet somit den Vorteil, dass eine Zuverlässigkeit von Parametern und/oder Einstellungen der Motorsteuerung, welche anhand der Simulationsumgebung vorgenommen und/oder optimiert wurden, erhöht werden kann. Außerdem bietet dies den Vorteil, dass das Betriebssystem durch den Hersteller in einer unveränderbaren Form bereitgestellt werden kann, da für einen Benutzer des Systems keine Notwendigkeit besteht, Änderungen am Betriebssystem vorzunehmen. Somit kann das Betriebssystem für einen Benutzer des Systems unveränderbar sein.

Die Basisfunktionalität des Betriebssystems kann optional eine oder mehrere der folgenden Funktionen umfassen: Steuern und/oder Regeln des Elektromotors; Erfassen eines oder mehrerer Betriebsparameter des Elektromotors; Erfassen eines oder mehrerer Messwerte; Erfassen einer oder mehrerer Vorgaben durch einen Benutzer; Steuern eines Aktuators des Elektromotors; Ermitteln eines vorgegebenen Soll-Betriebsparameters; Empfangen von Informationen von zumindest einer Software Applikation aus der Applikationssammlung; und Bereitstellen von Informationen für zumindest eine Software Applikation aus der Applikationssammlung. Die Funktionen der Basisfunktionalität können optional dadurch gekennzeichnet sein, dass diese für viele, die meisten oder alle Motorsteuerungen in gleicher oder ähnlicher Form benötigt werden und/oder häufig für das Ausführen einer oder mehrerer Softwareapplikationen benötigt werden. Dadurch, dass diese zur Basisfunktionalität gehörenden Funktionen vom Betriebssystem in durch den Benutzer unveränderbarer Form bereitgestellt werden, können diese in einer fest vorgegebenen Funktionsweise in der durch den Benutzer bereitzustellenden individualisierten Motorsteuerung verwendet werden.

Die softwarebasierte Steuergerätschnittstelle kann als ein Softwaremodul ausgebildet sein, welche als Schnittstelle zwischen dem Betriebssystem und dem vorbestimmten Steuergerät ausgebildet ist. Die softwarebasierte Steuergerätschnittstelle kann an das vorbestimmte Steuergerät derart angepasst sein, dass die vom Betriebssystem vorgegebenen Steuerbefehle in einer für das Steuergerät geeigneten Weise bereitgestellt werden.

Das System zur Bereitstellung einer Software zur Motorsteuerung für einen Elektromotor kann ferner zumindest eine weitere softwarebasierte Steuergerätschnittstelle umfassen, welche an zumindest ein weiteres vorbestimmtes Steuergerät angepasst ist. Optional kann das System dazu ausgelegt sein, die Software zur Motorsteuerung für eine Mehrzahl verschiedener vorbestimmter Steuergeräte bereitzustellen, wobei jeweils eine geeignete softwarebasierte Steuergerätschnittstelle bereitgestellt wird. Dies kann den Vorteil bieten, dass durch ein bloßes Bereitstellen einer jeweils angepassten Steuergerätschnittstelle das Betriebssystem auf vielen verschiedenen Arten von Steuergeräten eingesetzt werden kann. Außerdem kann dies den Vorteil bieten, dass für die Anpassung der Motorsteuerung an ein anderes vorbestimmtes Steuersystem keine Änderung des Betriebssystems erforderlich sein muss. Vielmehr kann das Betriebssystem optional in unveränderter Form beibehalten werden.

Das Verfahren zur Bereitstellung einer Software zur Motorsteuerung für einen Elektromotor kann optional ferner ein Bereitstellen einer softwarebasierten Applikationssammlung, mit zumindest einer in dem Betriebssystem ausführbaren Software Applikation, umfassen. Zudem kann das Verfahren ferner ein Hinzufügen und/oder Anpassen einer Software Applikation zur softwarebasierten Applikationssammlung umfassen. Dies kann ein Anpassen und/oder Individualisieren der Software zur Motorsteuerung ermöglichen, ohne dabei das Betriebssystem ändern zu müssen.

Sämtliche Offenbarung mit Bezug auf ein System zur Bereitstellung einer Software zur Motorsteuerung für einen Elektromotor, ein Verfahren zur Bereitstellung einer Software zur Motorsteuerung für einen Elektromotor, ein Verfahren zur Konfiguration eines Steuergeräts zur Motorsteuerung eines Elektromotors bzw. für ein Verfahren zur Herstellung eines Steuergeräts zur Motorsteuerung eines Elektromotors sind auch als für die jeweils anderen Systeme und Verfahren als offenbart anzusehen.

Die softwarebasierte Steuergerätschnittstelle kann dabei separat vom Betriebssystem bereitgestellt werden. Dies bietet den Vorteil, dass das Betriebssystem für einen Wechsel der Steuergerätschnittstelle nicht geändert werden muss. Alternativ oder zusätzlich kann das Betriebssystem einen oder mehrere softwarebasierte Steuergerätschnittstellen aufweisen. Letzteres bietet den Vorteil, dass eine weitere softwarebasierte Steuergerätschnittstelle nicht zwingend separat bereitgestellt werden muss.

Gleichermaßen kann die softwarebasierte Simulationsschnittstelle separat vom Betriebssystem bereitgestellt werden. Dies bietet den Vorteil, dass das Betriebssystem für einen Wechsel der Simulationsschnittstelle nicht geändert werden muss. Alternativ oder zusätzlich kann das Betriebssystem einen oder mehrere softwarebasierte Simulationsschnittstellen aufweisen. Letzteres bietet den Vorteil, dass eine weitere softwarebasierte Simulationsschnittstelle nicht zwingend separat bereitgestellt werden muss.

Die oben genannten und im Folgenden erläuterten Merkmale und Ausführungsformen sind dabei nicht nur in den jeweils explizit genannten Kombinationen als offenbart anzusehen, sondern sind auch in anderen technisch sinnhaften Kombinationen und Ausführungsformen vom Offenbarungsgehalt umfasst.

Weitere Einzelheiten und Vorteile sollen nun anhand der folgenden Beispiele und optionalen Ausführungsformen mit Bezug auf die Figuren näher erläutert werden.

Es zeigen:
- Figur 1: in einer schematischen Darstellung ein System gemäß einer optionalen Ausführungsform zur Bereitstellung einer Software zur Motorsteuerung für einen Elektromotor;
- Figur 2: in einer schematischen Darstellung ein System zur Bereitstellung einer Software zur Motorsteuerung für einen Elektromotor 12 gemäß einer weiteren optionalen Ausführungsform;
- Figur 3: in einer schematischen Darstellung ein Verfahren zur Bereitstellung einer Software zur Motorsteuerung für einen Elektromotor;
- Figur 4: ein Verfahren zur Konfiguration eines Steuergeräts zur Motorsteuerung eines Elektromotors gemäß einer optionalen Ausführungsform;
- Figur 5: ein Verfahren zur Herstellung eines Steuergeräts;
- Figur 6: in einer schematischen Darstellung ein Steuergerät gemäß einer optionalen Ausführungsform.

In den folgenden Figuren werden gleiche oder ähnliche Elemente in den verschiedenen Ausführungsformen der Einfachheit halber mit gleichen Bezugszeichen bezeichnet.

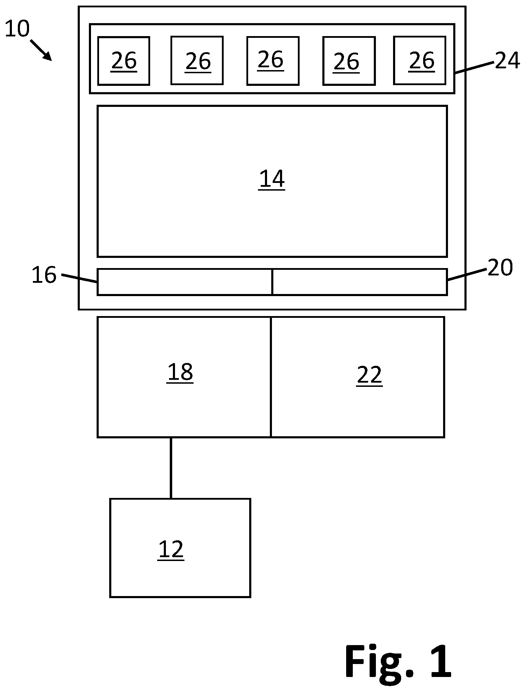

Figur 1 zeigt in einer schematischen Darstellung ein System 10 gemäß einer optionalen Ausführungsform zur Bereitstellung einer Software zur Motorsteuerung für einen Elektromotor 12. Das System 10 umfasst ein Betriebssystem 14, welches dazu ausgelegt ist, eine Basisfunktionalität für die Motorsteuerung des Elektromotors 12 bereitzustellen. Das System 10 umfasst ferner eine softwarebasierte Steuergerätschnittstelle16, welche dazu ausgelegt ist, das Betriebssystem 14 auf einem vorbestimmten Steuergerät 18 auszuführen und das vorbestimmte Steuergerät 18 dazu zu veranlassen, anhand vom Betriebssystem 14 vorgegebener Steuerbefehle Steuersignale für den Elektromotor 12 auszugeben. Darüber hinaus umfasst das System 10 eine softwarebasierte Simulationsschnittstelle 20, welche dazu ausgelegt ist, das Betriebssystem 14 in einer softwarebasierten Simulationsumgebung 22 auszuführen und vom Betriebssystem 14 vorgegebene Steuerbefehle der Simulationsumgebung 22 bereitzustellen.

Die softwarebasierte Steuergerätschnittstelle 18 kann dabei zusammen mit dem Betriebssystem 14 auf dem Steuergerät 18 ausführbar sein. Die softwarebasierte Simulationsschnittstelle 20 und die softwarebasierte Simulationsumgebung 22 können hingegen auf einem Computer ausführbar sein. Das Betriebssystem 14 kann mittels der softwarebasierten Simulationsschnittstelle 20 auf dem Computer und optional in der softwarebasierten Simulationsumgebung 22 ausführbar sein. Die softwarebasierte Simulationsumgebung 22 kann eine MATLAB Simulationsumgebung aufweisen oder als solche ausgebildet sein.

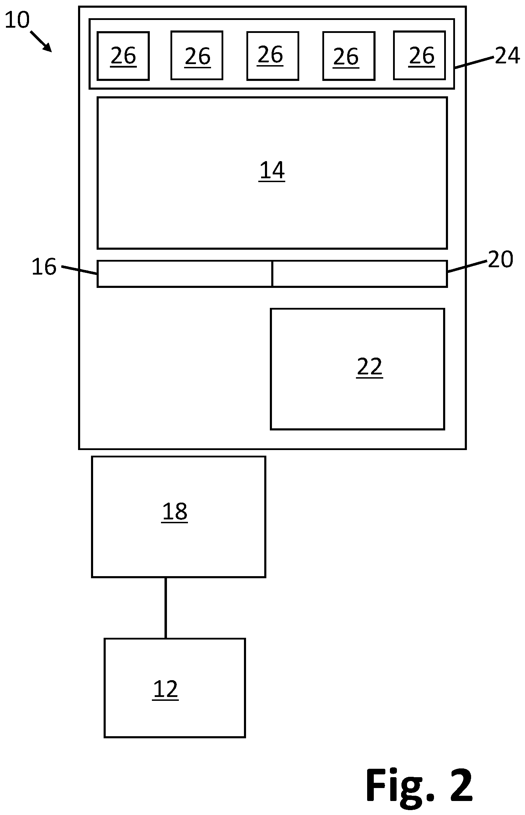

Figur 2 zeigt in einer schematischen Darstellung ein System 10 zur Bereitstellung einer Software zur Motorsteuerung für einen Elektromotor 12 gemäß einer weiteren optionalen Ausführungsform. Das System 10 umfasst dabei ein Betriebssystem 14, welches dazu ausgelegt ist, eine Basisfunktionalität für die Motorsteuerung des Elektromotors 12 bereitzustellen. Abweichend von der Ausführungsform gemäß Figur 1 weist dieses System ferner eine softwarebasierte Simulationsumgebung 22 auf, welche auf einem Computer ausführbar ist. Zudem weist das System eine softwarebasierte Steuergerätschnittstelle16 auf, welche dazu ausgelegt ist, das Betriebssystem 14 auf einem vorbestimmten Steuergerät 18 auszuführen und das vorbestimmte Steuergerät 18 dazu zu veranlassen, anhand vom Betriebssystem 14 vorgegebener Steuerbefehle Steuersignale für den Elektromotor 12 auszugeben. Darüber hinaus weist das System 10 eine softwarebasierte Simulationsschnittstelle 20 auf, welche dazu ausgelegt ist, das Betriebssystem 14 in der zum System 10 gehörenden softwarebasierten Simulationsumgebung 22 auszuführen und vom Betriebssystem 14 vorgegebene Steuerbefehle der Simulationsumgebung 22 bereitzustellen.

Die softwarebasierte Simulationsumgebung 22 kann dabei als eigenständiges Softwareprogramm auf dem Computer ausführbar sein. Die softwarebasierte Simulationsumgebung 22 kann optional als eigenständige WINDOWS Applikation ausgestaltet sein.

Das System gemäß Figur 1 oder 2 kann ferner eine softwarebasierte Applikationssammlung 24 mit zumindest einer in dem Betriebssystem ausführbaren Software Applikation 26 umfassen, wobei das System 10 derart ausgelegt ist, dass die zumindest eine Software Applikation 26 durch einen Benutzer des Systems 10 anpassbar ist (besser: angepasst werden kann). Zudem können Software Applikationen 26 durch den Benutzer des Systems 10 zur softwarebasierten Applikationssammlung 24 hinzufügbar sein (oder: hinzugefügt werden).

Das Betriebssystem 14 kann dabei in unveränderter Form mit der softwarebasierten Steuergerätschnittstelle 16 und mit der softwarebasierten Simulationsschnittstelle 20 verwendbar sein. Insbesondere kann das Betriebssystem 124 für einen Benutzer des Systems 10 unveränderbar sein.

Die Systeme 10 gemäß Figur 1 und Figur 2 können dabei derart ausgestaltet sein, dass die Basisfunktionalität des Betriebssystems 14 eine oder mehrere der folgenden Funktionen umfasst: ein Steuern und/oder Regeln des Elektromotors 12, ein Erfassen eines oder mehrerer Betriebsparameter des Elektromotors 12, ein Erfassen eines oder mehrerer Messwerte, Erfassen einer oder mehrerer Vorgaben durch einen Benutzer, Steuern eines Aktuators des Elektromotors 12, Ermitteln eines vorgegebenen Soll-Betriebsparameters; Empfangen von Informationen von zumindest einer Software Applikation 26 aus der Applikationssammlung 24, Bereitstellen von Informationen für zumindest eine Software Applikation 26 aus der Applikationssammlung 24.

Die softwarebasierte Steuergerätschnittstelle 16 kann als ein Softwaremodul ausgebildet sein, welche als Schnittstelle zwischen dem Betriebssystem 14 und dem vorbestimmten Steuergerät 18 ausgebildet ist. Die softwarebasierte Steuergerätschnittstelle kann dabei an das vorbestimmte Steuergerät 18 derart angepasst sein, dass die vom Betriebssystem 14 vorgegebenen Steuerbefehle in einer für das Steuergerät 18 geeigneten Weise bereitgestellt werden. Das System 10 kann ferner zumindest eine weitere softwarebasierte Steuergerätschnittstelle 16 umfassen, welche an zumindest ein weiteres vorbestimmtes Steuergerät 18 angepasst ist.

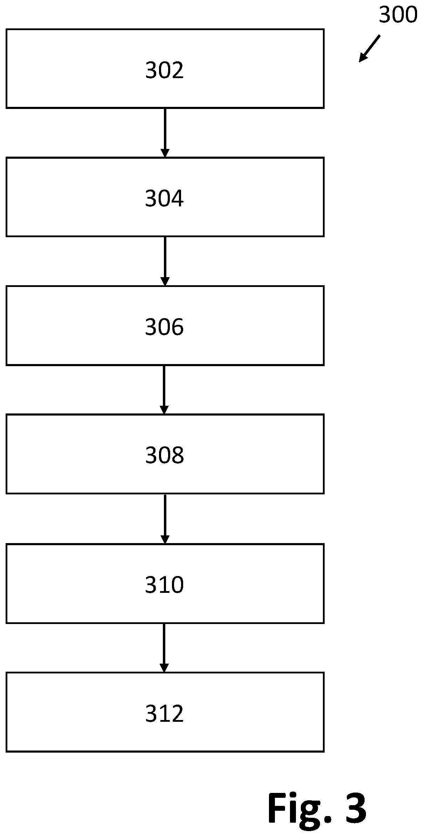

Figur 3 zeigt in einer schematischen Darstellung ein Verfahren 300 zur Bereitstellung einer Software zur Motorsteuerung für einen Elektromotor 12.

Das Verfahren 300 umfasst in einem Schritt 302 ein Bereitstellen eines Betriebssystems 14, welches dazu ausgelegt ist, eine Basisfunktionalität für die Motorsteuerung des Elektromotors 12 bereitzustellen.
Das Verfahren 300 umfasst ferner in einem Schritt 304 ein Ausführen des Betriebssystems 14 in Kombination mit einer softwarebasierten Simulationsschnittstelle 20 in einer softwarebasierten Simulationsumgebung 22, wobei die softwarebasierten Simulationsschnittstelle 20 dazu ausgelegt ist, vom Betriebssystem 14 vorgegebene Steuerbefehle der Simulationsumgebung 22 bereitzustellen.

In einem Schritt 306 umfasst das Verfahren 300 ein Anpassen zumindest eines Betriebsparameters für die Motorsteuerung für den Elektromotor 12 unter Verwendung der softwarebasierten Simulationsumgebung 22.

In einem Schritt 308 umfasst das Verfahren 300 ein Ausführen des Betriebssystems 14 auf einem vorbestimmten Steuergerät 18 zur Steuerung des Elektromotors 12 unter Verwendung des Betriebssystems 14, des zumindest einen angepassten Betriebsparameters und einer softwarebasierten Steuergerätschnittstelle 16, wobei die softwarebasierte Steuergerätschnittstelle 16 dazu ausgelegt ist, das vorbestimmte Steuergerät 18 dazu zu veranlassen, anhand vom Betriebssystem 14 vorgegebener Steuerbefehle Steuersignale an den Elektromotor 12 auszugeben.

Ferner kann das Verfahren 300 in einem Schritt 310 ein Bereitstellen einer softwarebasierten Applikationssammlung mit zumindest einer in dem Betriebssystem ausführbaren Software Applikation umfassen.

Außerdem kann das Verfahren 300 in einem Schritt 312 ein Hinzufügen und/oder Anpassen einer Software Applikation 26 zur softwarebasierten Applikationssammlung 24 umfassen.

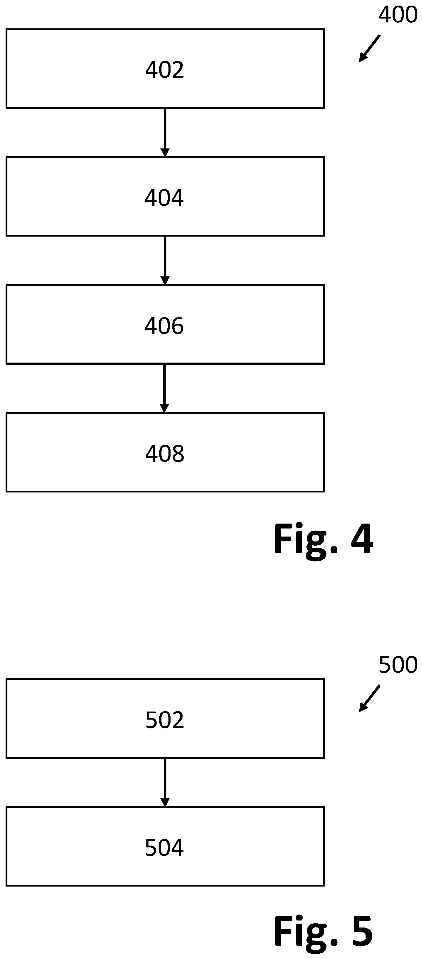

Figur 4 skizziert schematisch ein Verfahren 400 zur Konfiguration eines Steuergeräts 18 zur Motorsteuerung eines Elektromotors 12 gemäß einer optionalen Ausführungsform.

Das Verfahren 400 umfasst in einem Schritt 402 ein Bereitstellen eines Betriebssystems 14, welches dazu ausgelegt ist, eine Basisfunktionalität für die Motorsteuerung des Elektromotors 12 bereitzustellen.

In einem Schritt 404 umfasst das Verfahren 400 ein Ausführen des Betriebssystems 14 in Kombination mit einer softwarebasierten Simulationsschnittstelle 20 in einer softwarebasierten Simulationsumgebung 22. Dabei ist die softwarebasierte Simulationsschnittstelle 20 dazu ausgelegt, vom Betriebssystem 14 vorgegebene Steuerbefehle der Simulationsumgebung 22 bereitzustellen.

Das Verfahren 400 umfasst ferner in einem Schritt 406 ein Anpassen zumindest eines Betriebsparameters für die Motorsteuerung für den Elektromotor 12 unter Verwendung der softwarebasierten Simulationsumgebung 22.

Außerdem umfasst das Verfahren 400 in einem Schritt 408 ein Applizieren des Betriebssystems 14 und des zumindest einen angepassten Betriebsparameters auf das Steuergerät 18 mittels einer auf das Steuergerät 18 angepassten softwarebasierten Steuergerätschnittstelle 16.

Das Betriebssystem 14 kann dabei für einen Benutzer des Systems 10 unveränderbar sein.

Das Betriebssystem 14 kann dabei unverändert mittels der softwarebasierten Simulationsschnittstelle 20 in der softwarebasierten Simulationsumgebung 22 und mittels der softwarebasierten Steuergerätschnittstelle 20 auf dem Steuergerät 18 ausführbar sein.

Das Verfahren 400 kann zudem einen Teil eines Verfahrens 500 zur Herstellung eines Steuergeräts 18 zur Motorsteuerung eines Elektromotors 12 gemäß einer optionalen Ausführungsform darstellen. Das Verfahren 500 zur Herstellung eines Steuergeräts 18 ist schematisch in Figur 5 gezeigt und kann in einem Schritt 502 ein Bereitstellen eines Steuergeräts umfassen, sowie in einem Schritt 504 ein Konfigurieren des Steuergeräts mittels eines Verfahrens 400.

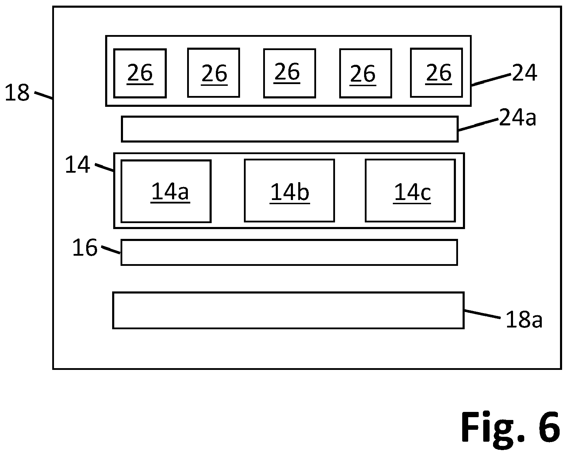

Figur 6 zeigt in einer schematischen Darstellung ein Steuergerät 18 gemäß einer optionalen Ausführungsform. Das Steuergerät weist dabei ein Betriebssystem 14 auf, welches Systemfunktionen 14a, Kommunikationsfunktionen 14b und Motorfunktionen 14c aufweisen kann. Zudem weist das Steuergerät 18 gemäß der gezeigten optionalen Ausführungsform auch eine softwarebasierte Steuergerätschnittstelle 16 auf, welche einen Betrieb des Steuergeräts 18 durch das Betriebssystems 14 ermöglicht.

Zudem weist das Steuergerät 18 eine Applikationssammlung 24 mit Software Applikationen 26 auf, welche mittels einer Applikationsschnittstelle 24a mit dem Betriebssystem 14 verbunden sein kann. Die Software Applikationen 26 können dabei von einem Benutzer eines Systems 10 bereitgestellt und/oder konfiguriert werden. Zu diesem Zweck können das Betriebssystem 14 und die Software Applikationen etwa in einer Simulationsumgebung 22 ausgeführt werden.

Das Steuergerät kann Hardwarefunktionen 18a aufweisen, welches sodann durch vom Betriebssystem bereitgestellte Steuerbefehle, die von der Steuergerätschnittstelle 16 in Steuerbefehle umgewandelt werden können, ausgeführt werden können.

### Bezugszeichenliste

- 10: System zur Bereitstellung einer Software zur Motorsteuerung für einen Elektromotor
- 12: Elektromotor
- 14: Betriebssystem
- 14a: Systemfunktionen
- 14b: Kommunikationsfunktionen
- 14c: Motorsteuerfunktionen
- 16: softwarebasierte Steuergerätschnittstelle
- 18: Steuergerät
- 18a: Hardwarefunktionen
- 20: softwarebasierte Simulationsschnittstelle
- 24: Applikationssammlung
- 24a: Applikationsschnittstelle
- 26: Software Applikation
- 300: Verfahren zur Bereitstellung einer Software zur Motorsteuerung für einen Elektromotor
- 302 - 312: Verfahrensschritte
- 400: Verfahren zur Konfiguration eines Steuergeräts zur Motorsteuerung eines Elektromotors
- 402 - 408: Steuergerät
- 500: Verfahren zur Herstellung eines Steuergeräts
- 502 - 504: Verfahrensschritte

## Patentansprüche

1. System (10) zur Bereitstellung einer Software zur Motorsteuerung für einen Elektromotor (12), das System (10) umfassend:
- ein Betriebssystem (14), welches dazu ausgelegt ist, eine Basisfunktionalität für die Motorsteuerung des Elektromotors (12) bereitzustellen;
- eine softwarebasierte Steuergerätschnittstelle (16), welche dazu ausgelegt ist, das Betriebssystem (14) auf einem vorbestimmten Steuergerät (18) auszuführen und das vorbestimmte Steuergerät (18) dazu zu veranlassen, anhand vom Betriebssystem (14) vorgegebener Steuerbefehle Steuersignale für den Elektromotor (12) auszugeben;
- eine softwarebasierte Simulationsschnittstelle (20), welche dazu ausgelegt ist, das Betriebssystem (14) in einer softwarebasierten Simulationsumgebung (22) auszuführen und vom Betriebssystem (14) vorgegebene Steuerbefehle der Simulationsumgebung (22) bereitzustellen.

2. System (10) gemäß Anspruch 1, wobei die softwarebasierte Steuergerätschnittstelle (20) zusammen mit dem Betriebssystem (14) auf dem Steuergerät (18) ausführbar ist.

3. System (10) gemäß Anspruch 1 oder 2, wobei die softwarebasierte Simulationsschnittstelle (20) und die softwarebasierte Simulationsumgebung (22) auf einem Computer ausführbar sind.

4. System (10) gemäß einem der vorhergehenden Ansprüche, wobei das Betriebssystem (14) mittels der softwarebasierten Simulationsschnittstelle (20) auf dem Computer und optional in der softwarebasierten Simulationsumgebung (22) ausführbar ist.

5. System (10) gemäß Anspruch 4, wobei die softwarebasierte Simulationsumgebung (22) eine MATLAB Simulationsumgebung aufweist oder als solche ausgebildet ist.

6. System (10) zur Bereitstellung einer Software zur Motorsteuerung für einen Elektromotor (12), das System (10) umfassend:
- ein Betriebssystem (14), welches dazu ausgelegt ist, eine Basisfunktionalität für die Motorsteuerung des Elektromotors (12) bereitzustellen;
- eine softwarebasierte Simulationsumgebung (22), welche auf einem Computer ausführbar ist;
- eine softwarebasierte Steuergerätschnittstelle (20), welche dazu ausgelegt ist, das Betriebssystem (14) auf einem vorbestimmten Steuergerät (18) auszuführen und das vorbestimmte Steuergerät (18) dazu zu veranlassen, anhand vom Betriebssystem (14) vorgegebener Steuerbefehle Steuersignale für den Elektromotor (12) auszugeben;
- eine softwarebasierte Simulationsschnittstelle (20), welche dazu ausgelegt ist, das Betriebssystem (14) in der softwarebasierten Simulationsumgebung (22) auszuführen und vom Betriebssystem (14) vorgegebene Steuerbefehle der Simulationsumgebung (22) bereitzustellen.

7. System (10) gemäß Anspruch 6, wobei die softwarebasierte Simulationsumgebung (22) als eigenständiges Softwareprogramm auf dem Computer ausführbar ist.

8. System (10) gemäß Anspruch 7, wobei die softwarebasierte Simulationsumgebung (22) als eigenständige WINDOWS Applikation ausgestaltet ist.

9. System (10) gemäß einem der vorhergehenden Ansprüche, ferner umfassend eine softwarebasierte Applikationssammlung (24) mit zumindest einer in dem Betriebssystem (14) ausführbaren Software Applikation (26), wobei das System (10) derart ausgelegt ist, dass die zumindest eine Software Applikation (26) durch einen Benutzer des Systems (10) anpassbar ist.

10. System (10) gemäß Anspruch 9, wobei Software Applikationen (26) durch den Benutzer des Systems (10) zur softwarebasierten Applikationssammlung (24) hinzufügbar sind.

11. System (10) gemäß einem der vorhergehenden Ansprüche, wobei das Betriebssystem (14) in unveränderter Form mit der softwarebasierten Steuergerätschnittstelle (16) und mit der softwarebasierten Simulationsschnittstelle (20) verwendbar ist.

12. System (10) gemäß einem der vorhergehenden Ansprüche, wobei das Betriebssystem (14) für einen Benutzer des Systems (10) unveränderbar ist.

13. System (10) gemäß einem der vorhergehenden Ansprüche, wobei die Basisfunktionalität des Betriebssystems (14) eine oder mehrere der folgenden Funktionen umfasst:
- Steuern und/oder Regeln des Elektromotors (12);
- Erfassen eines oder mehrerer Betriebsparameter des Elektromotors (12);
- Erfassen eines oder mehrerer Messwerte;
- Erfassen einer oder mehrerer Vorgaben durch einen Benutzer;
- Steuern eines Aktuators des Elektromotors (12);
- Ermitteln eines vorgegebenen Soll-Betriebsparameters;
- Empfangen von Informationen von zumindest einer Software Applikation aus der Applikationssammlung (24);
- Bereitstellen von Informationen für zumindest eine Software Applikation (26) aus der Applikationssammlung (24).

14. System (10) gemäß einem der vorhergehenden Ansprüche, wobei die softwarebasierte Steuergerätschnittstelle (20) als ein Softwaremodul ausgebildet ist, welche als Schnittstelle zwischen dem Betriebssystem (14) und dem vorbestimmten Steuergerät (18) ausgebildet ist.

15. System (10) gemäß Anspruch 14, wobei die softwarebasierte Steuergerätschnittstelle (16) an das vorbestimmte Steuergerät (18) derart angepasst ist, dass die vom Betriebssystem (14) vorgegebenen Steuerbefehle in einer für das Steuergerät (18) geeigneten Weise bereitgestellt werden.

16. System (10) gemäß Anspruch 15, ferner umfassend zumindest eine weitere softwarebasierte Steuergerätschnittstelle (20), welche an zumindest ein weiteres vorbestimmtes Steuergerät (18) angepasst ist.

17. Verfahren (300) zur Bereitstellung einer Software zur Motorsteuerung für einen Elektromotor (12), das Verfahren (300) umfassend:
- Bereitstellen (302) eines Betriebssystems (14), welches dazu ausgelegt ist, eine Basisfunktionalität für die Motorsteuerung des Elektromotors (12) bereitzustellen;
- Ausführen (304) des Betriebssystems (14) in Kombination mit einer softwarebasierten Simulationsschnittstelle (20) in einer softwarebasierten Simulationsumgebung (22), wobei die softwarebasierte Simulationsschnittstelle (20) dazu ausgelegt ist, vom Betriebssystem (14) vorgegebene Steuerbefehle der Simulationsumgebung bereitzustellen;
- Anpassen (306) zumindest eines Betriebsparameters für die Motorsteuerung für den Elektromotor (12) unter Verwendung der softwarebasierten Simulationsumgebung (22);
- Ausführen (308) des Betriebssystems (14) auf einem vorbestimmten Steuergerät (18) zur Steuerung des Elektromotors (12) unter Verwendung des Betriebssystems (14), des zumindest einen angepassten Betriebsparameters und einer softwarebasierten Steuergerätschnittstelle (20), wobei die softwarebasierte Steuergerätschnittstelle (20) dazu ausgelegt ist, das vorbestimmte Steuergerät (18) dazu zu veranlassen, anhand vom Betriebssystem (14) vorgegebener Steuerbefehle Steuersignale an den Elektromotor (12) auszugeben.

18. Verfahren (300) gemäß Anspruch 17, ferner umfassend:
- Bereitstellen (310) einer softwarebasierten Applikationssammlung (24) mit zumindest einer in dem Betriebssystem (14) ausführbaren Software Applikation (26).

19. Verfahren (300) gemäß Anspruch 18, ferner umfassend:
- Hinzufügen (312) und/oder Anpassen einer Software Applikation (26) zur softwarebasierten Applikationssammlung (24).

20. Verfahren (400) zur Konfiguration eines Steuergeräts (18) zur Motorsteuerung eines Elektromotors (12), das Verfahren (400) umfassend:
- Bereitstellen (402) eines Betriebssystems (14), welches dazu ausgelegt ist, eine Basisfunktionalität für die Motorsteuerung des Elektromotors (12) bereitzustellen;
- Ausführen (404) des Betriebssystems (14) in Kombination mit einer softwarebasierten Simulationsschnittstelle (20) in einer softwarebasierten Simulationsumgebung (22), wobei die softwarebasierte Simulationsschnittstelle (20) dazu ausgelegt ist, vom Betriebssystem (14) vorgegebene Steuerbefehle der Simulationsumgebung bereitzustellen;
- Anpassen (406) zumindest eines Betriebsparameters für die Motorsteuerung für den Elektromotor (12) unter Verwendung der softwarebasierten Simulationsumgebung (22);
- Applizieren (408) des Betriebssystems (14) und des zumindest einen angepassten Betriebsparameters auf das Steuergerät (18) mittels einer auf das Steuergerät (18) angepassten softwarebasierten Steuergerätschnittstelle (16).

21. Verfahren (400) gemäß einem der Ansprüche 17 bis 20, wobei das Betriebssystem (14) für einen Benutzer unveränderbar ist.

22. Verfahren (400) gemäß einem der Ansprüche 17 bis 21, wobei das Betriebssystem (14) unverändert mittels der softwarebasierten Simulationsschnittstelle (20) in der softwarebasierten Simulationsumgebung (22) und mittels der softwarebasierten Steuergerätschnittstelle (20) auf dem Steuergerät (18) ausführbar ist.

23. Verfahren (500) zur Herstellung eines Steuergeräts (18) zur Motorsteuerung eines Elektromotors (12), das Verfahren (500) umfassend:
- Bereitstellen (502) eines Steuergeräts (18); und
- Konfigurieren (504) des Steuergeräts (18) anhand eines Verfahrens gemäß einem der Ansprüche 20 bis 22.
